# EUROPÄISCHE PATENTSCHRIFT

(11) **EP 0 575 825 B1**
(45) Veröffentlichungstag und Bekanntmachung des Hinweises auf die Patenterteilung: **27.12.1995**
(21) Anmeldenummer: 93109280.3
(22) Anmeldetag: 09.06.1993
(51) Int. Cl.: F16D 65/56

(54) **Selbsttätige Nachstellvorrichtung für eine Bremse, insbesondere eine Trommelbremse**
Automatic adjusting device for a brake, particularly a drum brake
Dispositif de rajustage pour un frein, en particulier pour un frein à tambour

(30) Priorität: 25.06.1992 DE 9208465 U
(43) Veröffentlichungstag der Anmeldung: 29.12.1993
(73) Patentinhaber: LUCAS INDUSTRIES PUBLIC LIMITED COMPANY, Solihull, West Midlands B91 3TX (GB)
(72) Erfinder: Lüdtke, Peter Johannes, D-5480 Remagen (DE); Conrad, Willibrord, D-5405 Ochtendung (DE); Brix, Herman, D-5407 Boppard 4 (DE); Auer, Hans-Gerd, D-5470 Andernach (DE)
(74) Vertreter: von Hellfeld, Axel, Dr. Dipl.-Phys.

(56) Entgegenhaltungen:
- DE-C- 2 508 614
- DE-C- 3 019 214
- FR-A- 2 587 428

## Beschreibung

Die Erfindung betrifft eine selbsttätige Nachstellvorrichtung für eine Bremse mit einem Klinken-Sperrad-Getriebe und einem Bimetallbauteil, das bei Erreichen einer vorbestimmten Temperatur die Klinke außer Eingriff mit dem Sperrad bringt.

Eine solche selbsttätige Nachstellvorrichtung ist aus der DE 30 19 214 C2 bekannt. Dort ist ein Bimetallstreifen an einer Klinke eines Klinkenhebels befestigt, trägt also die Klinke nicht. Vielmehr trägt die Klinke das Bimetallbauteil. Dehnt sich bei Erhitzung das Bimetallteil aus, so schlägt es an das Sperrad an und hebt dadurch die Klinke von den Zähnen des Sperrades ab. Dieser Stand der Technik erfordert neben der Klinke und dem die Klinke tragenden (oder mit ihm einstückig hergestellten) Hebel als zusätzliches Bauteil den Bimetallstreifen. Dies erhöht den Herstellungsaufwand.

Das genannte Bimetallbauteil dient dazu, eine übermäßige Nachstellung der Bremse aufgrund einer Wärmeausdehnung der Bremse zu verhindern. Dies gilt insbesondere für Trommelbremsen, die sich bei Erhitzung thermisch so ausdehnen, daß eine Vergrößerung des Bremslüftspiels auftritt.

Eine selbsttätige Nachstellvorrichtung soll aber nur eine Vergrößerung des Bremslüftspiels verhindern, die durch Verschleiß der Bremsbeläge auftritt, nicht aber durch eine thermische Ausdehnung von Bremsteilen, insbesondere der Trommel bei einer Trommelbremse.

Würde nämlich eine Nachstellung der Bremse auch dann erfolgen, wenn sich das Bremslüftspiel aufgrund thermischer Effekte verändert hat, so bestünde die Gefahr, daß nach einem Abkühlen der Bremse die Bremsbacken an anderen Teilen der Bremse (bei einer Trommelbremse also der Trommel) schleifen, was wiederum zu einer unerwünschten Erhitzung der Bremse und sogar zu einer Zerstörung der Radlager und der Bremse führen könnte.

Andererseits wird bei Bremsen in aller Regel ein möglichst geringes Bremslüftspiel (also z.B. bei einer Trommelbremse der Abstand zwischen den Oberflächen der Bremsbeläge und dem gegenüberliegenden Innenflächen der Trommel) angestrebt, um ein schnelles Ansprechen der Bremse zu ermöglichen. Es wird beim Bremsen ein möglichst geringer sogenannter Leerweg angestrebt. Wird aber das Bremslüftspiel in diesem Sinne sehr klein gehalten, so können bereits Bremstrommeltemperaturen von z.B. 100°C eine so beträchtliche Bremslüftspielvergrößerung bewirken, daß eine selbsttätige Nachstellvorrichtung wirksam wird und den oben erläuterten höchst unerwünschten Effekt hat.

Im Stand der Technik sind vielfältige Versuche bekannt, bei Nachstellvorrichtungen der hier in Rede stehenden Art eine temperaturbedingte Nachstellung zu verhindern. Durch temperaturabhängige Steuerungen wird dabei die Nachstellung verhindert. Einen solchen, relativ aufwendigen Stand der Technik beschreibt die US-PS 2 292 017.

Auch die DE 30 19 223 C2 beschreibt eine selbsttätige Nachstellvorrichtung, bei der (ebenso wie bei der oben genannten DE 30 19 214 C2) ein zusätzliches Bauteil eingesetzt wird, um bei einer Erhitzung der Bremse eine unerwünschte Nachstellung zu verhindern.

Die DE 25 08 614 C2 beschreibt allgemein eine selbsttätige Nachstellvorrichtung, bei der die vorliegende Erfindung bevorzugt eingesetzt wird. Bei dieser bekannten selbsttätigen Nachstellvorrichtung ist eine in ihrer Länge einstellbare Strebe vorgesehen, die zwischen einer der Bremsbacken und einem mechanischen Betätigungshebel der Bremse angeordnet ist sowie durch Federkraft in Anlage an der anderen Bremsbacke gehalten wird. Ein Klinkenhebel ist vorgesehen, der an einer der beiden Bremsbacken schwenkbar gelagert ist und in ein an der Strebe drehbar gelagertes Sperrzahnrad eingreift, um die Länge der Strebe zum Ausgleich von übermäßigem Verschleiß der Bremsbacken zu verstellen. Dabei ist der Klinkenhebel als zweiarmiger Hebel ausgebildet, dessen einer Arm die Klinke trägt und dessen anderer Arm durch eine Feder stets axial gegen das klinkenhebelseitige Ende der Strebe vorgespannt ist. Dieser Stand der Technik wird nachfolgend als bekannt vorausgesetzt.

Der Erfindung liegt die Aufgabe zugrunde, eine selbsttätige Nachstellvorrichtung für eine Bremse, insbesondere eine Trommelbremse, zu schaffen, die mit geringem baulichen Aufwand eine möglichst zuverlässige Vermeidung einer temperaturbedingten unerwünschten Nachstellung der Bremse bewirkt.

Erfindungsgemäß wird diese Aufgabe bei einer selbsttätigen Nachstellvorrichtung mit einem Klinken-Sperrad-Getriebe und einem Bimetallbauteil, das bei Erreichen einer vorbestimmten Temperatur die Klinke außer Eingriff mit dem Sperrad bringt, dadurch gelöst, daß ein die Klinke aufweisender Nachstellhebel zumindest teilweise als Bimetallbauteil ausgebildet ist.

Dieses Prinzip der Erfindung angewandt auf den Stand der Technik gemäß der DE 25 08 614 führt dazu, daß der Klinkenhebel (auch als "Nachstellhebel" bezeichnet) selbst zumindest teilweise aus Bimetall besteht.

Die Zuverlässigkeit der Vorrichtung wird gemäß einer bevorzugten Ausgestaltung der Erfindung dadurch erhöht, daß das Bimetallbauteil an einem der Bremsbackenträger befestigt ist. Hierdurch wird die Wärmeleitung zum Bimetallbauteil verbessert, so daß dieses zuverlässig anspricht.

Nachfolgend wird ein Ausführungsbeispiel der Erfindung anhand der Zeichnung näher erläutert. Es zeigt:
- Fig.1: schematisch eine Trommelbremse;
- Fig.2: einen Schnitt entsprechend D-D in Fig.1;
- Fig.3: einen Ausschnitt der Trommelbremse gemäß Fig.1 in vergrößertem Maßstab;
- Fig.4: einen Schnitt entsprechend C-C in Fig.3;
- Fig.5: eine Ansicht der Anordnung gemäß Fig.3 von unten, wobei die Bremse sich in einem kalten Zustand befindet;
- Fig.6: eine Seitenansicht des Sperrades und der Klinke bei kalter Bremse;
- Fig.7: eine Ansicht der Anordnung gemäß Fig.5, aber bei heißer Bremse und
- Fig.8: eine Ansicht des Sperrades und der Klinke bei heißer Bremse.

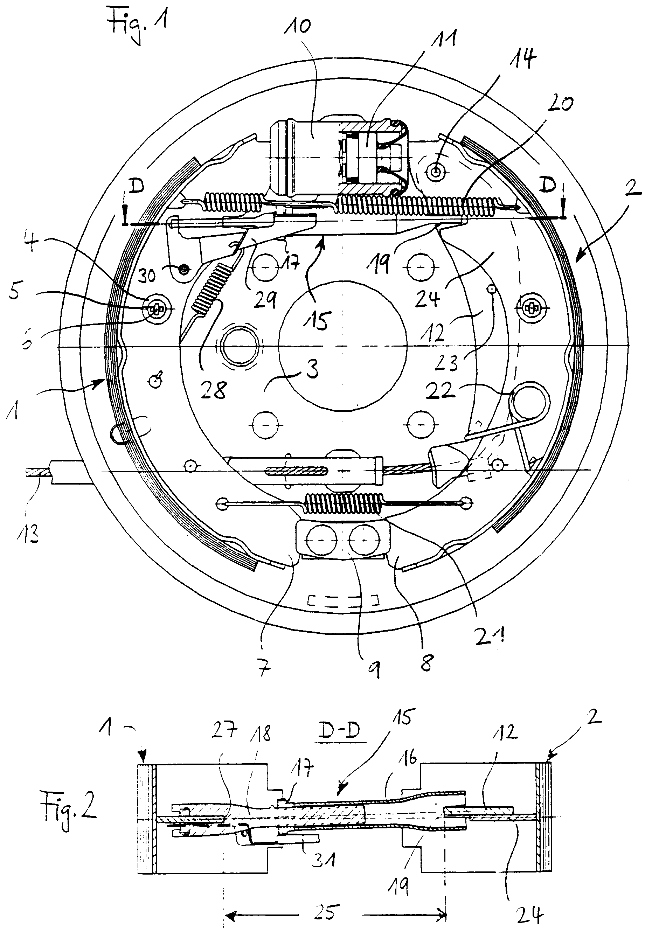

Die Trommelbremse gemäß Fig.1 weist zwei Bremsbacken 1, 2 auf, die auf einer Ankerplatte 3 montiert sind. Die Montage erfolgt mittels einer Niederhaltefeder 4, einem Federteller 5 und einem Stift 6. Mit ihren unteren Enden 7, 8 stützen sich die Bremsbacken 1, 2 an einem Lagerblock 9 ab. Zwischen den oberen Enden der Bremsbacken 1, 2 ist ein Radbremszylinder 10 in bekannter Weise angeordnet, in welchem zwei Betätigungskolben 11 (nur einer gezeigt) bei Zufuhr von Bremsflüssigkeit die Bremsbacken 1, 2 gegen die Bremstrommel (nicht gezeigt) drücken.

Außer einer hydraulischen ist auch eine mechanische Betätigung der Bremse möglich. Hierzu dient ein Bremshebel 12, der am in Fig.1 rechts gezeichneten Bremsbacken 2 drehbar gelagert ist. Mittels eines Bremsseiles 13 ist der Bremshebel 12 mechanisch betätigbar (z.B. durch Handbetätigung). Der mechanische Bremshebel 12 ist um ein Lager 14 drehbar.

Eine Strebe 15 erstreckt sich zwischen den beiden Bremsbacken 1, 2. Die Strebe 15 besteht aus einer Hülse 16, einem Sperrad 17 (auch "Nachstellritzel" genannt) und einer Druckstange 18, wie in Fig.2 näher dargestellt ist (vgl. auch DE 25 08 614 C2). Unterhalb des Lagers 14 ist der Bremshebel 12 über die Strebe 15 mit dem in Fig.1 links gezeigten Bremsbacken 1 gekoppelt. Wird gemäß Fig.1 ein mit dem Bremshebel 12 verbundenes Bremsseil 13 nach links gezogen, so schwenkt der Bremshebel 12 um das Lager 14 (im Uhrzeigersinn) und drückt dabei über die Strebe 15 den linken Bremsbacken 1 gegen die Bremstrommel (nicht gezeigt). Sodann schwenkt der Bremshebel 12 um eine Anlagestelle 19 an der Strebe 15 und drückt dabei über das Lager 14 den ablaufenden Bremsbacken 2 an die Bremstrommel. Das Bremsmoment wird über den Lagerblock 9 in die Ankerplatte 3 und von dieser in die Fahrzeugsachse (nicht gezeigt) eingeleitet.

Nach einem Lösen der Bremse (sei es nach einer hydraulischen oder einer mechanischen Betätigung) ziehen Backenrückzugfedern 20, 21 die Bremsbacken 1, 2 wieder zurück in die Ruhestellung. In der Ruhestellung werden die Federkräfte durch die Strebe 15 bzw. den Lagerblock 9 aufgenommen.

Eine Spannfeder 22 mit zwei abstehenden Schenkeln unterstützt das Zurückschwenken des Bremshebels 12 in die Ruhestellung, bis dieser mit einem Anschlag 23 an einem Stegblech 24 des ablaufenden Bremsbackens 2 anschlägt.

Bei einer hydraulischen Betätigung der Bremse drücken die Kolben 11 des Radbremszylinders 12 die Bremsbacken 1, 2 gegen die Bremstrommel (nicht gezeigt). Hierbei wird die Strebe 15 entlastet. Bei einer Betätigung der Bremse vergrößert sich der Abstand 25 (Fig.2) zwischen der Anlegestelle 27 des auflaufenden Bremsbackens 1 und der Anlegestelle 19 des Bremshebels 12 entsprechend dem Bremslüftspiel. Das Bremslüftspiel u.a. ist durch den Verschleiß der Beläge der Bremsbacken 1, 2 bestimmt.

Eine Nachstellfeder 28 spannt ständig einen Nachstellhebel 29, so daß der Nachstellhebel 29 um ein Lager 30 ständig im Uhrzeigersinn vorgespannt ist. Der Nachstellhebel 29 weist eine Klinke 31 auf und deren Zusammenwirken mit dem Sperrad 17 ist in den Fig.3 bis 8 näher beschrieben.

Unter bestimmten Bedingungen dreht die Klinke 31 des Nachstellhebels 29 das Sperrad 17. Das Sperrad 17 weist eine Sägezahnverzahnung an seinem Umfang auf, was als solches im Stand der Technik bekannt ist.

Die von der Nachstellfeder 28 auf den Nachstellhebel 29 ausgeübte Zugkraft erzeugt am Nachstellhebel 29 ein im Uhrzeigersinn wirkendes Drehmoment um das Lager 30. Dieses Drehmoment wird über einen linken, kürzeren Hebelarm 32 (Fig.3, Fig.4) auf die Druckstange 18 übertragen, und zwar an der Stelle 33 gemäß Fig.3. Die hier vom Hebelarm 32 auf die Druckstange übertragende Kraft beträgt beim dargestellten Ausführungsbeispiel etwa 4 kp. Diese Kraft wird über ein Nachstellgewinde 34 (Fig.4) der Druckstange 18 auf ein Innengewinde 35 des Sperrades 18 (Nachstellritzel) übertragen und von dessen Seitenfläche 36 weiter auf die Hülse 16 und von dieser auf den Anschlag 19 am Handbremshebel 12. Für eine Drehung des Sperrades 17, wodurch die Gesamtlänge der Strebe 15 verlängert wird, ist also immer die durch die oben genannte Kraft von 4 kp erzeugte Reibung des Sperrades in den genannten Gewinden sowie bezüglich der Seitenfläche der Hülse (an der Seitenfläche 36) zu überwinden.

Diese Reibungskräfte bewirken zusammen mit der in den Fig.6 und 8 dargestellten Sägezahn-Verzahnung 37 des Sperrades 17, daß die Klinke 31 des Nachstellhebels 29 in der einen Bewegungsrichtung des Nachstellhebels (im Uhrzeigersinn) das Sperrad im Sinne einer Verlängerung der Strebe 15 verdreht, während in der anderen Drehrichtung die Klinke jedoch über die Verzahnung rutscht. Ohne eine solche Reibung bestünde die Gefahr, daß trotz der Sägezähne das Sperrad sich zurückdrehen könnte.

Das Sperrad 17 (Nachstellritzel) weist gemäß den Fig.6 und 8 Sägezähne 37 auf, die zwei in bezug auf den Radius asymmetrisches Flächen 38, 39 haben, von denen die eine (38) mehr tangential ausgerichtet ist, während die andere (39) mehr radial verläuft.

Ist das Bremslüftspiel relativ klein, so ist auch der Schwenkwinkel des Nachstellhebels 29 um das Lager 30 relativ klein, so daß die Klinke 31 des Nachstellhebels 29 sich nur auf der mehr tangential ausgerichteten Fläche 38 des Sägezahns 37 bewegt. Die Klinke 31 rutscht nicht über die Kante des Zahns. Erst bei relativ großen Schwenkwinkeln des Nachstellhebels 29 zieht die Klinke 31 an der mehr radial ausgerichteten Fläche 39 eines Zahns 37 und verdreht so das Sperrad 17, so daß eine Verlängerung der Strebe 15 erfolgt. Beim Lösen der Bremse schwenkt der Nachstellhebel 29 in seine Ausgangslage zurück und greift nun hinter die nächste radiale Zahnflanke.

Erwärmt sich die Bremstrommel, so dehnt sie sich aus und vergrößert somit ihren Innendurchmesser. Bei einer Betätigung der Bremse nimmt nun der Schwenkwinkel des Nachstellhebels aufgrund dieser thermischen Ausdehnung zu und würde ohne die nachfolgend beschriebenen Maßnahmen eine Nachstellung der Strebe 15 bewirken, was beim Abkühlen und Zusammenziehen der Bremstrommel zu einem Schleifen der Bremsbacken führen könnte.

Um derart unerwünschte Effekte zu vermeiden, ist der Nachstellhebel 29 in besonderer Weise ausgebildet, nämlich als Bimetallbauteil.

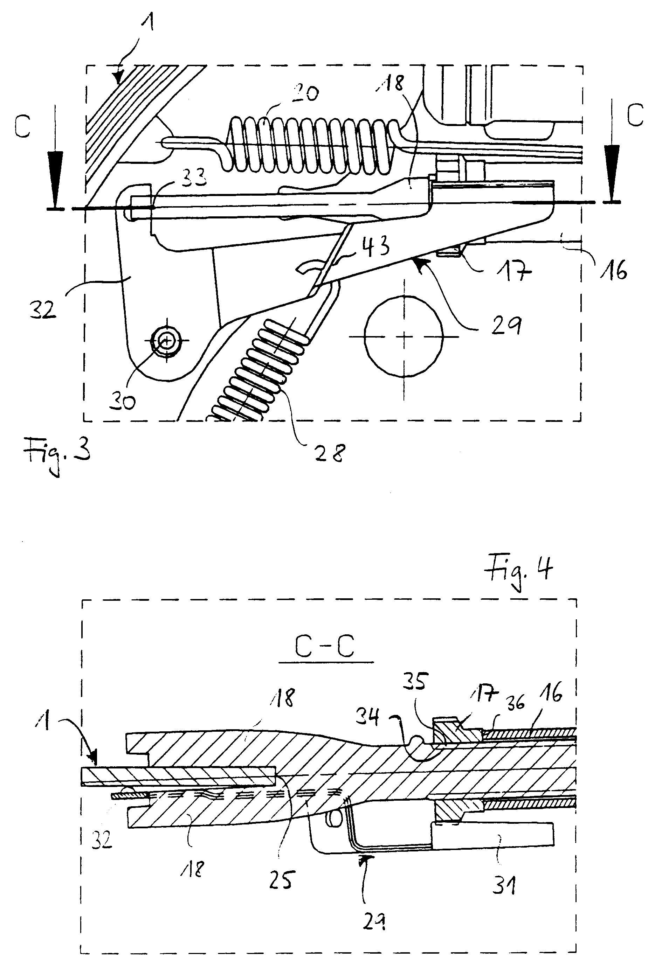

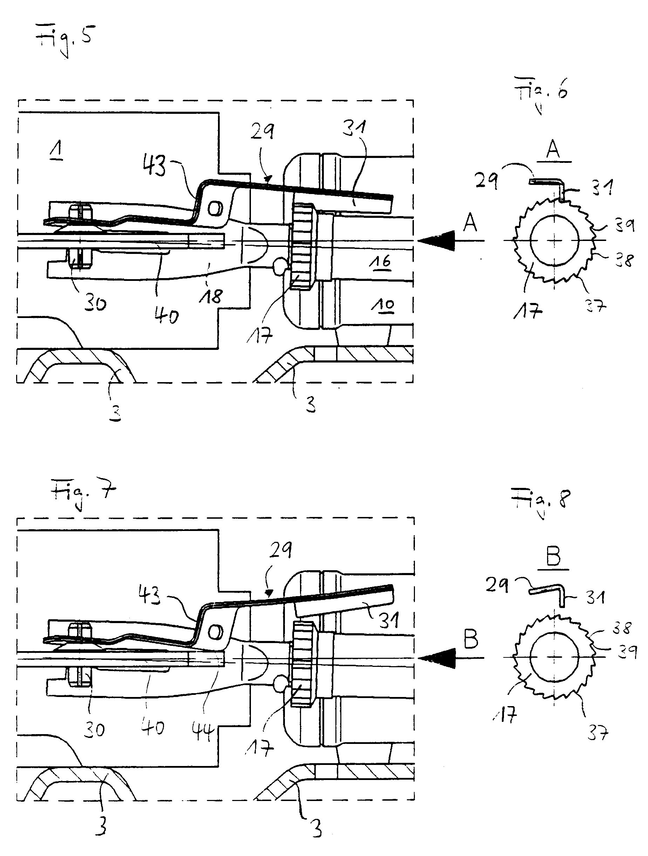

Die Fig.5 und 6 zeigen den Nachstellhebel 29 bei kalter Bremse. Durch die Nachstellfeder 28 (in den Fig.5 und 7 der Einfachheit halber weggelassen) wird nicht nur eine Drehung des Nachstellhebels 29 um das Lager 30 bewirkt, sondern es wird auch der Nachstellhebel in der Darstellung gemäß Fig.5 mit einer geringfügigen Kraft (beim Ausführungsbeispiel 0,2 kp) nach unten gezogen, so daß die Klinke 31 des Nachstellhebels 29 stets mit dieser Kraft auf die mehr tangential ausgerichtete Fläche 38 des Sägezahnes 37 gedrückt wird.

Die Fig.7 und 8 zeigen den Nachstellhebel 29 bei heißer Bremse. Durch das Erwärmen des Bimetalls, aus dem der Nachstellhebel 29 gefertigt ist, hat dieser sich stark gekrümmt, und zwar soweit, daß die Klinke 31 von den Zähnen 37 des Sperrades 17 abhebt (vgl. auch Fig.8). Im Laufe einer solchen thermischen Krümmung des Nachstellhebels 29 kommt ein abgekröpfter Bereich 43 des Nachstellhebels in Berührung mit dem Stegblech 40 des auflaufenden Bremsbackens 1. Aufgrund der Z- oder S-förmigen Krümmung des Nachstellhebels 29 stützt sich also ein gekrümmter Bereich 43 des Hebels am Stegblech 40 ab und somit wird die von der Nachstellfeder 28 erzeugte, in Fig.7 nach unten gerichtete Kraft vom Stegblech 40 aufgefangen, und zwar an der Berührungsstelle 44. Ein weiteres Erwärmen der Bremse und damit auch des Nachstellhebels 29 führt dazu, daß eine weitere Krümmung des Nachstellhebels 29 erfolgt, die gewährleistet, daß die Klinke 31 von der Verzahnung des Sperrades 17 vollständig abhebt. Eine Schwenkbewegung des Nachstellhebels 29 führt nicht mehr zu einem Nachstellen der Bremse.

Die vorstehend beschriebene Ausgestaltung einer selbsttätigen Nachstellvorrichtung ermöglicht die Ausgestaltung eines einzigen Bauteiles, nämlich des im Stand der Technik schon vorhandenen Nachstellhebels 29 derart, daß eine übermäßige Nachstellung bei Erhitzung der Bremse vermieden ist, ohne daß ein zusätzliches Bimetallbauteil erforderlich wäre. Der Nachstellhebel 29 hat also eine Doppelfunktion: Zum einen bewirkt er die erwünschte Nachstellung der Bremse bei Belagverschleiß durch Eingriff der Klinke 31 in die Zähne 37 des Sperrades 17 und zum anderen bewirkt der Nachstellhebel 29 selbst eine Außerkraftsetzung der Nachstellung bei einer übermäßigen Erhitzung der Bremse. Die gezeigte Anordnung läßt sich mit üblichen Bimetallwerkstoffen so empfindlich ausgestalten, daß ein Ansprechen der Vorrichtung bereits bei einer Erhitzung von 60°C erfolgt. Die Klinke 31 kann integral mit einer Komponente des Bimetallbauteils 29 ausgebildet sein.

## Patentansprüche

1. Selbsttätige Nachstellvorrichtung für eine Bremse mit einem Klinken-Sperrad-Getriebe und einem Bimetallbauteil, das bei Erreichen einer vorbestimmten Temperatur die Klinke (31) außer Eingriff mit dem Sperrad (17) bringt,
dadurch **gekennzeichnet,** daß ein die Klinke (31) aufweisender Nachstellhebel (29) zumindest teilweise als Bimetallbauteil ausgebildet ist.

2. Nachstellvorrichtung nach Anspruch 1,
dadurch **gekennzeichnet,** daß der Nachstellhebel (29) an einem Bremsbelagträger (40) befestigt ist.

## Claims

1. An automatic adjusting device for a brake, comprising a pawl and ratchet wheel mechanism and a bimetal structural member which, upon reaching a predetermined temperature, disengages the pawl (31) from the ratchet wheel (17), **characterized** in that an adjustment lever (29) which comprises the pawl (31) is designed, at least partly, as a bimetal structural member.

2. The adjusting device as claimed in claim 1, characterized in that the adjustment lever (29) is secured to a friction lining carrier member (40).

## Revendications

1. Dispositif de compensation automatique pour un frein, comprenant une transmission à cliquet et roue de blocage, et un élément de structure bimétallique qui lors de l'atteinte d'une température prédéterminée, place le cliquet (31) hors d'engagement avec la roue de blocage (17),
caractérisé en ce qu'un levier de compensation (29), présentant le cliquet (31), est réalisé au moins partiellement sous forme d'élément de structure bimétallique.

2. Dispositif de rajustage selon la revendication 1,
caractérisé en ce que le levier de compensation (29) est fixé sur un support de garniture de frein (40).
